# EUROPEAN PATENT APPLICATION

(11) **EP 4 759 508 A1**
(43) Date of publication of application: **17.06.2026**
(21) Application number: 25222629.5
(22) Date of filing: 11.12.2025
(51) Int. Cl.: B29C 45/16, B29C 45/14, B60R 13/00, F21S 43/14, F21S 43/50, B29L 11/00, B29L 31/00

(54) **PRODUCTION METHOD OF A LENTICULAR BODY FOR AUTOMOTIVE USE AND LIGHTED BADGE FOR MOTOR VEHICLES PROVIDED WITH SUCH LENTICULAR BODY**

(30) Priority: 12.12.2024 IT 202400028287
(71) Applicant: Marelli Automotive Lighting Italy S.p.A. Con Socio Unico, 10078 Venaria Reale (TO) (IT)
(72) Inventor: MOSCA, Cristian, 10078 Venaria Reale (TO) (IT); CORADAZZI, Francesco, Southfield, 48033 (US); CONTESSI, Stefano, 33028 Tolmezzo (UD) (IT)
(74) Representative: Studio Torta S.p.A.

(57) **Abstract**

Production method of a lenticular body (3) for automotive use, which is provided with a first face (3a) and a second face (3b) opposite to each other, has one or more blind recesses and/or engravings (8) on said second face (3b), and has a polymeric-material, monolithic multilayer structure, comprising: a substantially transparent front layer (5), which forms said first face (3a); a substantially opaque rear layer (7), which forms said second face (3b) and is traversed by said one or more blind recesses and/or engravings (8); and a substantially transparent intermediate layer (6), which is interposed between said front layer (5) and said rear layer (7); wherein said intermediate layer (6) is made first in a substantially transparent, high-melting polymeric material and the front (5) and rear (7) layers are overmoulded directly over said intermediate layer (6).

## Description

### CROSS-REFERENCE TO RELATED PATENT APPLICATIONS

This application claims priority of Italian Patent Application No. 102024000028287 filed on December 12, 2024, the entire disclosure of which is herein incorporated by reference.

### TECHNICAL FIELD

The present invention relates to a production method of a lenticular body for automotive use and to a lighted badge for motor vehicles provided with such lenticular body.

More specifically, the present invention relates to a backlightable lens suitable for being incorporated in a lighted badge, which is structured to be placed on the front or rear part of a car or similar motor vehicle, and is capable of producing a symbol, logo, acronym, pictogram and/or brand or other luminous graphic sign, which advantageously uniquely identifies the car model and/or the manufacturer of the car. Use to which the following description will make explicit reference without thereby losing generality.

### STATE OF THE ART

As is known, a headlight or taillamp for cars and similar motor vehicles is, conventionally, an electrically-powered lighting device, which is specifically structured to be placed on the front or rear part of the car or other motor vehicle for road use, and has the function of illuminating the area surrounding the vehicle and/or of indicating, by means of light signals complying with particular photometric homologation standards, the position of the vehicle, the actuation of the vehicle's brakes and/or the turning direction of the vehicle.

In recent years, several car manufacturers have moreover decided to equip their new models of cars with lighted badges, which are generally incorporated in, or securely fixed onto, the vehicle's grille and are capable of producing a luminous version of a symbol, logo, pictogram and/or identifying brand of the car model and/or of the manufacturer of the same car.

Some of these lighted badges are basically made up of: a rigid rear body, which is made of opaque polymeric material, is concave in shape and is adapted to be securely fixed on the front or rear part of the vehicle body; a rigid front half-shell, traditionally called front lens, which is made of semi-transparent polymeric material and is arranged to close the mouth of the rear body; a series of LEDs (acronym for Light Emitting Diode), which are located on the bottom of the rear body and direct the light towards the front half-shell, so as to back-light the front half-shell; and a plurality of light-guide section-bars, which are made of light-conductive material, overall copy the shape of the luminous pictogram, design, symbol, logo, wording and/or brand to be produced, and are arranged in front of some LEDs present on the bottom of the rear body, so as to channel and concentrate the light emitted by said LEDs towards specific areas of the front half-shell, in order to form, at centre of the half-shell, a luminous pictogram, design, symbol, logo, wording and/or brand.

Patent US9616823 B1 describes a lighted badge of this type.

The main drawback of the lighted badges like the one described in patent US9616823 B1 is that they do not offer a sufficiently high contrast between the luminous pictogram, design, symbol, logo, wording and/or brand and the surrounding background, thus they have been immediately discarded by car manufacturers.

To meet the needs of car manufacturers, recently there have been developed lighted badges in which the front half-shell is coupled with a shielding mask made of opaque polymeric material, which is overmoulded on the rear of the front half-shell so as to form a single body with the latter, and is centrally provided with one or more through openings or slits, which shape copies that of the pictogram, design, symbol, logo, wording and/or brand to be produced.

In this case, the light produced by the LEDs reaches the front lens only through the one or more through slits present on the shielding mask, forming a luminous pictogram, design, symbol, logo, wording and/or brand on a dark and opaque background.

Optionally, some parts of the rear face of the component formed by the transparent half-shell and the shielding mask are moreover mirror-metallized so as to further increase the contrast between the luminous pictogram, design, symbol, logo, wording and/or brand and the surrounding background.

Unfortunately, lighted badges that use an overmoulded shielding mask are relatively expensive to produce, because the front half-shell and the rear shielding mask, due to manufacturing requirements, have to be made both of polycarbonate, respectively transparent and opaque, with all the problems that this entails.

The outer surface of transparent polycarbonate front half-shells, in fact, is known to have low surface hardness and weak resistance to atmospheric agents and ultraviolet rays, physical properties that make them unsuitable for being placed on the front part of the vehicle.

To overcome this structural limitation, the outer surface of the front half-shell is currently subjected to a surface hardening treatment, called Hard-Coating, which improves the mechanical properties of the polycarbonate, while at the same time keeping its optical and aesthetic characteristics unaltered.

Unfortunately, this particular surface treatment is relatively expensive and significantly affects the overall production costs of lighted badges that use the screening mask.

### SUMMARY OF THE INVENTION

Aim of the present invention is to provide a lighted badge, which is more economical to produce and, at the same time, can offer a high contrast between the luminous pictogram, design, symbol, logo, wording and/or brand and the surrounding background, while at the same time meeting the latest aesthetic requirements of car manufacturers.

In accordance with these aims, according to the present invention there is provided a production method of a backlightable lenticular body for automotive use as defined in claim 1 and preferably, though not necessarily, in any one of the claims dependent thereon.

According to the present invention there is also provided a lighted badge for motor vehicles as defined in claim 12 and preferably, though not necessarily, in any one of the claims dependent thereon.

### BRIEF DESCRIPTION OF THE DRAWINGS

The invention will now be described with reference to the accompanying drawings showing a non-limiting embodiment thereof, wherein:
- Figure 1 is a partially exploded, perspective view of a lighted badge realized according to the teachings of the present invention, with parts removed for clarity's sake;
- Figure 2 is a perspective view of the front lens of the lighted badge shown in Figure 1, with parts removed for clarity's sake;
- Figure 3 is a side view of the front lens shown in Figure 2, with parts in section and parts removed for clarity's sake;
- Figure 4 is a partially exploded perspective view of the front lens shown in Figure 2, with parts removed for clarity's sake; whereas
- Figures 5, 6 and 7 show, in a schematic way, some steps of the production of the front lens shown in Figures 2, 3 and 4.

### DETAILED DESCRIPTION OF THE EMBODIMENTS

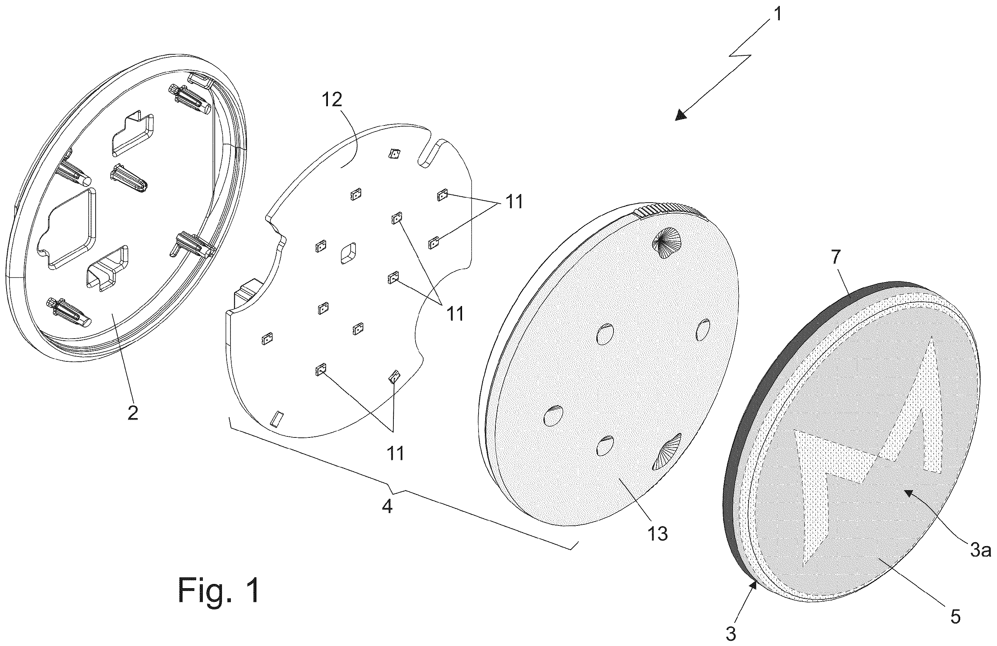

With reference to Figure 1, number 1 denotes, as a whole, a lighted badge for motor vehicles and the like, which is particularly suitable to be mounted on any car or other similar motor vehicle (for road use), and is capable of producing one or more luminous graphic signs easily visible at night.

In other words, the lighted badge 1 is an electrically-powered lighting device, which is specifically structured to be mounted on any car or other similar motor vehicle, and is capable of creating one or more luminous graphic signs easily visible even at night.

Preferably, said luminous graphic sign or signs moreover include any symbol, logo, acronym, pictogram and/or identifying brand, which allow to identify, advantageously uniquely, the car model and/or the manufacturer of the car on which the lighted badge 1 is placed.

More specifically, the lighted badge 1 is advantageously adapted to be securely fixed on the front and/or rear part of the vehicle-body of a car or other similar motor vehicle for road use.

With reference to Figures 1, 2 and 3, the lighted badge 1 comprises: a rear body 2 with a substantially rigid and advantageously also opaque (to visible light) structure, which is concave in shape and is adapted to be securely fixed onto the vehicle body (not shown), preferably at the front or rear part of the same vehicle body; a front half-shell 3 with a substantially rigid and at least partially transparent to light (visible light) structure, traditionally called front lens, which is separate and distinct from the rear body 2, is substantially lenticular in shape, and is securely fixed to the rear body 2 to close the mouth of the latter, so as to form, together with the rear body 2, a rigid and internally hollow casing; and an electrically-powered lighting assembly 4, which is at least partially housed within the rigid casing formed by the rear body 2 and the front half-shell 3, and is adapted to selectively back-light the front half-shell 3 with light in the visible spectrum.

More specifically, with reference to Figures 1, 2 and 3, the lighted badge 1, or rather the rigid casing formed by the rear body 2 and the front half-shell 3, preferably has a substantially plate-like and advantageously also discoidal structure.

Preferably, the lighted badge 1 is moreover adapted to be recessed within an advantageously substantially complementary-shaped, receiving seat present on the vehicle body, preferably so that the front half-shell 3 can surface outside of the vehicle body.

In addition, the rear body 2 is preferably shaped substantially in the form of a basin, and is preferably made of an advantageously opaque (to visible light), polymeric material, preferably by injection moulding.

In the example shown, in particular, the rear body 2 is preferably shaped substantially in the form of a circular basin, and is preferably made of acrylonitrile-butadienestyrene (ABS) or other opaque polymeric material.

Preferably, the rear body 2 is moreover provided, on the outer surface, with a series of fastening appendages (not visible in the figures) that allow the rear body 2 to be rigidly attached to the vehicle body.

Obviously, in a different embodiment, the rear body 2 could be also shaped and/or structured so as to be simply cantilever fixed to the vehicle body.

With reference to Figures 1, 2, and 3, the front half-shell 3, on the other hand, preferably has a shape substantially complementary to the mouth of the rear body 2, and is preferably securely fixed to the rear body 2 in a substantially fluid-tight manner.

More specifically, the front half-shell 3 is preferably concave in shape, and is provided with an outer or visible face 3a and an inner face 3b opposite to each other. The outer face 3a is advantageously convex, and is turned opposite the rear body 2. The inner face 3b, instead, is advantageously concave and is turned towards the rear body 2.

Preferably, the front half-shell 3 is moreover provided with a perimeter flange 3c, which protrudes cantilevered from the perimeter edge of the inner face 3b, and is advantageously structured so as to couple to the perimeter edge of the rear half-shell 2.

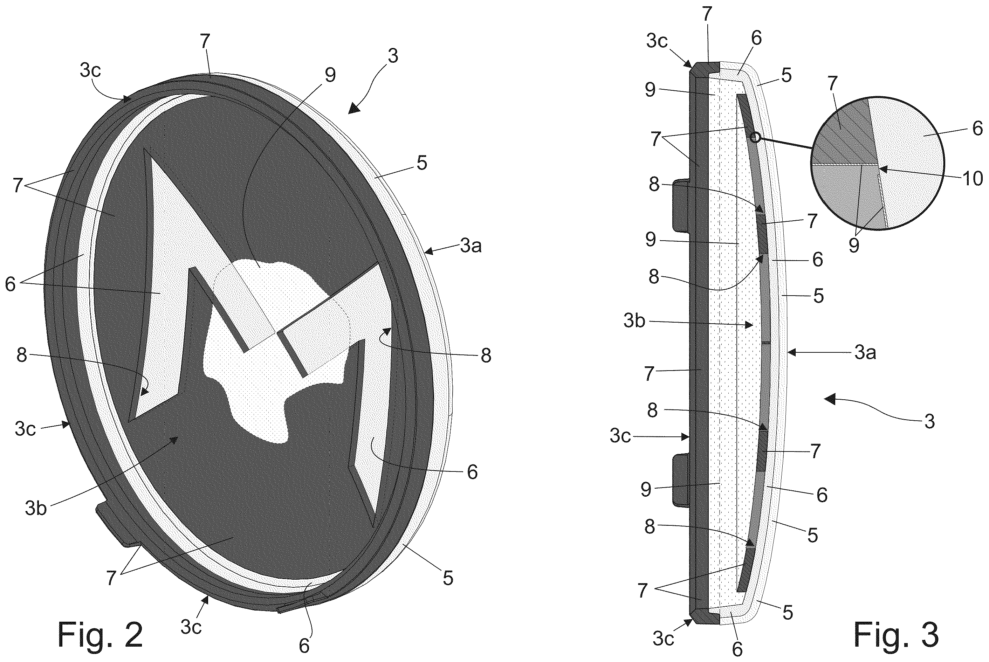

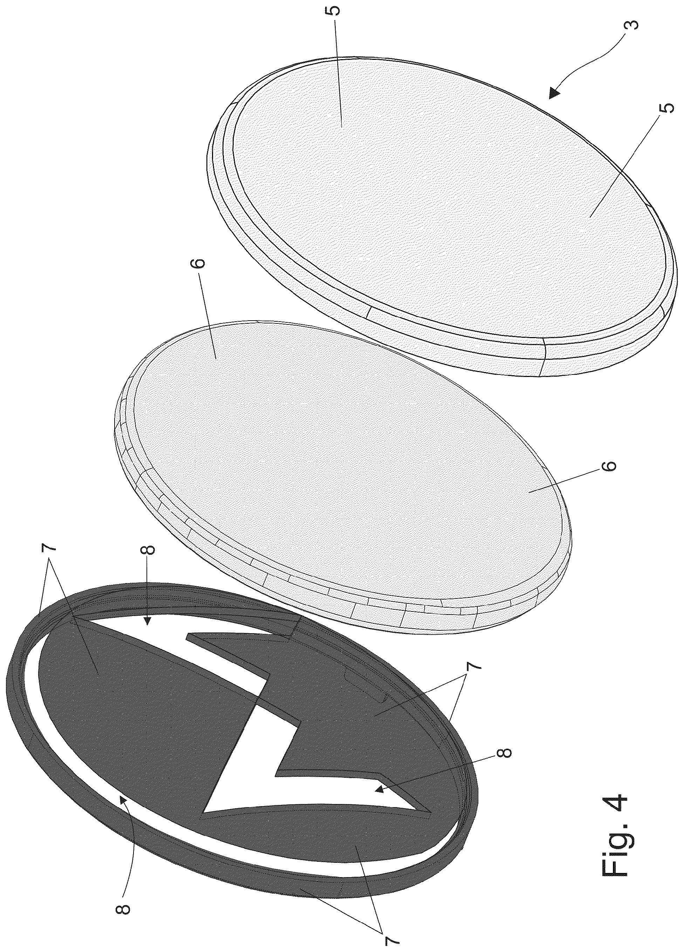

With reference to Figures 2, 3 and 4, in addition, the front half-shell 3 consists of a lenticular body with a monolithic multilayer structure, which comprises at least three superimposed layers of polymeric material, which are made by moulding and overmoulding in at least two polymeric materials that differ from each other in polymeric composition and softening temperature.

More specifically, the front half-shell 3, or rather the lenticular body with a monolithic multilayer structure, comprises: a front layer 5 with a thickness advantageously ranging between 1 and 5 mm (millimetres), which forms all or almost all of the outer face 3a of the front half-shell 3, and is made of a low-melting polymeric material, which is substantially transparent (to visible light) and advantageously also colourless; an intermediate layer 6 with a thickness advantageously ranging between 1 and 5 mm (millimetres), which is contiguous and adherent/attached to the front layer 5, and is made of a first high-melting polymeric material, which is substantially transparent (to visible light) and advantageously also colourless; and a rear layer 7 with a thickness advantageously ranging between 1 and 5 mm (millimetres), which is contiguous and adherent/attached to the intermediate layer 6, forms all or almost all of the inner surface 3b of the front half-shell 3, and is made of a second high-melting polymeric material, which is substantially opaque (to visible light) and advantageously also coloured.

The front layer 5 and the rear layer 7 of the lenticular body, therefore, contribute to forming the two major and opposite faces of the lenticular body, while the intermediate layer 6 of the lenticular body is interposed between the front layer 5 and the rear layer 7.

Clearly, the low-melting polymeric material has a lower melting/softening temperature than that of the first and second high-melting polymeric materials.

Preferably, the first and the second high-melting polymeric materials moreover have/share the same polymeric base, i.e. they have/share the same polymeric component of the material.

More specifically, the front layer 5 of the lenticular body preferably forms the entire outer face 3a of the front half-shell 3 and, advantageously, also part of the perimeter flange 3c of the same front half-shell 3.

Preferably, the front layer 5 is furthermore made of substantially transparent (to visible light) and advantageously also colourless, polymethylmethacrylate (PMMA).

The intermediate layer 5 of the lenticular body, in turn, is preferably made of substantially transparent (to visible light) and advantageously also colourless, polycarbonate (PC), and covers the front layer 5 of the lenticular body preferably seamlessly and/or over the entire extension of the same front layer 5, advantageously also forming part of the perimeter flange 3c of the same front half-shell 3.

Finally, the rear layer 7 of the lenticular body preferably forms the entire inner face 3b of the front half-shell 3 and, advantageously, also part of the perimeter flange 3c of the same front half-shell 3.

Preferably, the rear layer 7 of the lenticular body with a monolithic multilayer structure, or rather of the front half-shell 3, is moreover made of substantially opaque (to visible light) and advantageously also coloured, polycarbonate (PC). More specifically, the opaque polycarbonate is advantageously a black-coloured opaque polycarbonate.

With reference to Figures 2, 3 and 4, in addition, the surface of the inner face 3b of the front half-shell 3 is provided with one or more blind recesses and/or engravings 8, which extend for the entire thickness of the rear layer 7 up to reach at least the intermediate layer 6.

More specifically, the depth of said one or more blind recesses and/or engravings 8 is greater than or equal to the local thickness of the rear layer 7, and at the same time also less than the local overall thickness of said lenticular body.

Even more specifically, the depth of said one or more blind recesses and/or engravings 8 is preferably such that the intermediate layer 6 forms the bottom of said one or more blind recesses and/or engravings 8.

The bottom of said one or more blind recesses and/or engravings 8 is therefore transparent (to visible light).

Within said one or more blind recesses and/or engravings 8, therefore, the intermediate layer 6 of the lenticular body contributes to forming the inner face 3b of the front half-shell 3.

Said one or more blind recesses and/or engravings 8, furthermore, are advantageously shaped and arranged on the inner face 3b of the front half-shell 3 so as to copy the shape of the luminous graphic sign or signs to be produced on the outer face 3a of the same front half-shell 3

In other words, the lenticular body is additionally provided with one or more blind recesses and/or engravings 8, which extend for the entire thickness of the rear layer 7 of the same lenticular body up to reach at least the intermediate layer 6, and have a predetermined shape that advantageously copies that of the luminous graphic sign or signs to be produced on the outer face 3a of the front half-shell 3.

With reference to Figures 2, 3 and 4, therefore, said lenticular body is provided with a first (i.e. the outer face 3a) and a second face (i.e. the inner face 3b) opposite to each other, and with one or more blind recesses and/or engravings 8, which are made on said second face (i.e. the inner face 3b).

The front layer 5 contributes to forming the first face of the lenticular body. The rear layer 7 contributes to forming the second face of the lenticular body, and is crossed in a pass-through manner by said one or more blind recesses and/or engravings 8. Finally, the intermediate layer 6 is interposed between said front layer 5 and said rear layer 7.

In the example shown, in particular, the one or more blind recesses and/or engravings 8 preferably have a depth equal to the local thickness of only the rear layer 7 of the lenticular body with a monolithic multilayer structure.

In other words, said one or more blind recesses and/or engravings 8 preferably do not extend into the intermediate layer 6 of the lenticular body.

Preferably, said one or more blind recesses and/or engravings 8 furthermore comprise: an annular groove that extends on the inner face 3b of the front half-shell 3, or rather along the rear layer 7 of the lenticular body with a monolithic multilayer structure, close to the perimeter edge of the same face, i.e. close to the perimeter flange 3c; and a pair of substantially V-shaped grooves, which are made in the central area of the inner face 3b of the front half-shell 3, or rather in the central area of the rear layer 7 of the lenticular body with a monolithic multilayer structure, and are arranged specularly to each other so as to form a stylized M.

With particular reference to Figures 2 and 3, preferably the inner face 3b of the front half-shell 3, or rather the second face of the lenticular body, is moreover at least partially mirror-metallized, advantageously with the exception of one or more limited areas or portions of the bottom of some or all of said one or more blind recesses and/or engravings 8.

Said non-metallized areas or portions of the bottom of said one or more blind recesses and/or engravings 8, therefore, are transparent and allow light to freely enter into the lenticular body.

Preferably, said non-metallized or transparent areas or portions of the bottom of said one or more blind recesses and/or engravings 8 are furthermore arranged along the perimeter edge of the bottom of the same one or more blind recesses and/or engravings 8.

More specifically, the inner face 3b of the front half-shell 3, or rather the second face of the lenticular body, is preferably covered by an opaque film 9, which has reflective properties and a nominal thickness advantageously less than 0.5 mm (millimetres).

Preferably, said opaque and reflective film 9 furthermore covers the bottom of some or all of said one or more blind recesses and/or engravings 8, advantageously with the exception of a buffer band 10 of a predetermined width, which extends, advantageously seamlessly, along the perimeter edge of the bottom of the same one or more blind recesses and/or engravings 8.

Clearly, at the buffer band 10, the light emitted by the lighting assembly 4 can freely enter into the body of the front half-shell 3 and then exit from the outer face 3a of the same half-shell.

In the example shown, in particular, the opaque reflective film 9 is preferably made of metallic material, preferably by vacuum deposition. In addition, the opaque reflective film 9 preferably covers, substantially seamlessly, the rear layer 7 of the lenticular body and the bottom of said one or more blind recesses and/or engravings 8, advantageously with the exception of the area or areas forming the buffer band 10.

The buffer band 10, in turn, has a nominal width preferably greater than 0.5 mm and/or less than 2 mm (millimetres), and is preferably made by selective and localised removal of the opaque reflective film 9 from the surface of the inner face 3b of the front half-shell 3, or rather from the surface of the intermediate layer 6 of the lenticular body with a monolithic multilayer structure.

More specifically, the buffer band 10 is preferably made by localised laser ablation of the opaque reflective film 9, which covers the areas/portions of the surface of the intermediate layer 6, which contribute to forming the buffer band 10.

In a different embodiment, however, the opaque reflective film 9 could cover only the bottom of said one or more blind recesses and/or engravings 8, advantageously with the exception of the area or areas forming the buffer band 10.

With reference to Figure 1, the lighting assembly 4, on the other hand, is preferably an LED light source, advantageously with a plate-like structure, and is preferably substantially entirely accommodated within the casing formed by the rear body 2 and the front half-shell 3.

More specifically, the lighting assembly 4 is preferably located on the bottom of the rear body 2, and preferably comprises: a plurality of LEDs 11 (acronym for Light Emitting Diodes) which are located on one or more printed circuit boards 12 advantageously arranged close to the bottom of the rear body 2, so as to direct the light produced towards the front half-shell 3; and preferably also an intermediate light diffuser 13 advantageously with a plate-like structure, which is interposed between the LEDs 11 and the front half-shell 3 so as to be crossed by the light emitted by the LEDs 11, and is structured so as to distribute the light coming from the LEDs 11 on the inner face 3b of the front half-shell 3, advantageously in a substantially uniform manner over the entire surface of the same inner face 3b.

In the example shown, in particular, the LEDs 11 are preferably distributed on the upper face of a single printed circuit board 12 advantageously discoidal in shape, which is fixed on the bottom of the rear body 2 and advantageously accommodates the power supply and/or control electronics of the LEDs.

The intermediate light diffuser 13, in turn, preferably comprises a lenticular body advantageously discoidal in shape, which is placed in front of the printed circuit board 12 so as to be crossed by the light emitted by the LEDs 11, and is made of a transparent or semi-transparent material with scattering properties, i.e. it is capable of scattering the light crossing it.

More specifically, the lenticular body of the light diffuser 13 preferably has a shape substantially complementary to the inner face 3b of the front half-shell 3, and is preferably made of a transparent or opaline polymeric material that advantageously incorporates, within itself, reflective microspheres and/or other types of reflective corpuscles of similar dimensions.

Operation of the lighted badge 1 is easily inferable from the above.

The light produced by the lighting assembly 4 crosses the front half-shell 3 only at the bottom of said one or more blind recesses and/or engravings 8, or rather at the buffer band 10 in the case of metallization of the inner face 3b, while forming, on the outer face 3b of the front half-shell 3, one or more luminous graphic signs, which shape roughly copies that of said one or more blind recesses and/or engravings 8.

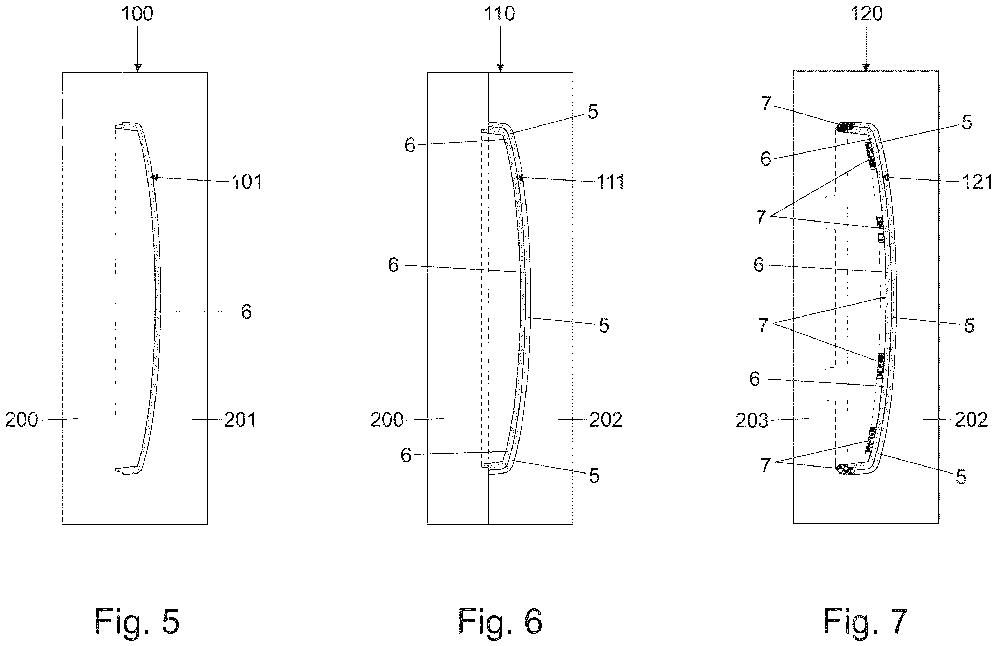

With reference to Figures 5, 6 and 7, the production of the front half-shell 3 with a substantially rigid and at least partially transparent to light structure, or rather of the lenticular body with a monolithic multilayer structure, firstly provides for the step of making, by injection moulding, the intermediate layer 6 alone.

Once the intermediate layer 6 has been made, the production of said lenticular body with a monolithic multilayer structure, or rather of the front half-shell 3, provides for overmoulding the front layer 5 and the rear layer 7 of the lenticular body directly over the intermediate layer 6, on opposite sides thereof.

More specifically, once the intermediate layer 6 has been made, the production of said lenticular body with a monolithic multilayer structure, or rather of the front half-shell 3, provides for making, by injection moulding, the outer layer 5 of the lenticular body with a monolithic multilayer structure directly over the intermediate layer 6.

In other words, the production of the lenticular body with a monolithic multilayer structure, or rather of the front half-shell 3, provides for overmoulding the outer layer 5 of the lenticular body with a monolithic multilayer structure directly over the intermediate layer 6.

Once the outer layer 5 has been made, the production of the lenticular body with a monolithic multilayer structure, or rather of the front half-shell 3, provides for making, by injection moulding, the inner layer 7 of the lenticular body with a monolithic multilayer structure together with the relative one or more blind recesses and/or engravings 8, directly over the intermediate layer 6, clearly on the opposite side with respect to the outer layer 5.

In other words, the production of the lenticular body with a monolithic multilayer structure, or rather of the front half-shell 3, provides for overmoulding the inner layer 7 of the lenticular body with a monolithic multilayer structure directly over the intermediate layer 6, clearly on the opposite side with respect to the outer layer 5.

In addition, the production of the lenticular body with a monolithic multilayer structure, or rather of the front half-shell 3, preferably moreover provides for mirror-metallizing the surface of the second face of the lenticular body at least partially formed by the inner layer 7, advantageously with the exception of the perimeter edge of the area or areas forming the bottom of some or all of said one or more blind recesses and/or engravings 8.

More specifically, with reference to Figure 5, the production of the lenticular body with a monolithic multilayer structure, or rather of the front half-shell 3, preferably provides for, in sequence, the steps of:
- setting up a first mould 100, which is internally provided with a first closed cavity 101 that copies in negative only the shape of the intermediate layer 6 of the front half-shell 3;
- injecting into mould 100 said substantially transparent (to visible light) and advantageously also colourless, first high-melting polymeric material so as to fill up the closed cavity 101 of the same mould 100;
- waiting for said first high-melting polymeric material to solidify inside the closed cavity 101, so as to form a first lenticular semi-finished product, which shape copies that of the intermediate layer 6 of the front half-shell 3; and finally
- extracting/removing said first semi-finished product from the closed cavity 101 of mould 100.

Preferably, the first high-melting polymeric material is moreover a substantially transparent and advantageously also colourless, polycarbonate (PC).

With reference to Figure 6, after having extracted the first semi-finished product from mould 100, the production of the front half-shell 3 preferably provides for, in sequence, the steps of:
- setting up a second mould 110 which is internally provided with a second closed cavity 111 that copies in negative the overall shape of the front layer 5 and the intermediate layer 6 of front half-shell 3;
- placing said first semi-finished product inside the closed cavity 111 of the second mould 110;
- injecting into mould 110 said substantially transparent (to visible light) and advantageously also colourless, low-melting polymeric material so as to fill up the closed cavity 111 of the second mould 110;
- waiting for said low-melting polymeric material to solidify inside the closed cavity 111 thus forming a second lenticular semi-finished product, which incorporates said first semi-finished product and which shape copies that of the assembly of the front 5 and intermediate 6 layers of the front half-shell 3; and finally
- extracting/removing said second semi-finished product from the closed cavity 111 of mould 110.

Preferably, the low-melting polymeric material is moreover a substantially transparent (to visible light) and advantageously also colourless, polymethylmethacrylate (PMMA).

With reference to Figure 7, after having extracted the second semi-finished product from the second mould 110, the production of the lenticular body with a monolithic multilayer structure, or rather of the front half-shell 3, preferably provides for, in sequence, the steps of:
- setting up a third mould 120 which is internally provided with a third closed cavity 121 that copies in negative the shape of the whole front half-shell 3, advantageously including said one or more blind recesses and/or engravings 8;
- placing said second semi-finished product inside the closed cavity 121 of the third mould 120;
- injecting into the mould 120 said substantially opaque (to visible light) and advantageously also coloured, second high-melting polymeric material so as to fill up the closed cavity 121 of the third mould 120;
- waiting for said second high-melting polymeric material to solidify inside the closed cavity 121 thus forming a third lenticular semi-finished product, which incorporates said second semi-finished product and which shape copies that of the entire front half-shell 3; and finally
- extracting/removing said third semi-finished product from the closed cavity 121 of mould 120.

Preferably, the second high-melting polymeric material is moreover a substantially opaque and advantageously also coloured, optionally black in colour, polycarbonate (PC).

In a more sophisticated embodiment, the lenticular body with a monolithic multilayer structure, or rather the front half-shell 3, may furthermore be realized by sharing, from time to time, some parts of the moulds 100, 110 and 120, so that the first or second (intermediate) semi-finished product is not completely removed from the corresponding mould 100 or 110.

More specifically, with reference to Figures 5, 6 and 7, the mould 100 is preferably made up of a first die 200 and of a first complementary-shaped punch 201, which are selectively couplable to each other so as to form/delimit, in between themselves, the closed cavity 101.

The mould 110, in turn, is preferably made up of the die 200 of mould 100 and of a second complementary-shaped punch 201, which are selectively couplable to each other so as to form/delimit, in between themselves, the closed cavity 111.

In this case, in the passage from mould 100 to mould 110, the first intermediate semi-finished product preferably remains attached to the die 200.

Similarly, the mould 120 is preferably made up of the punch 202 of mould 110 and of a complementary-shape second die 203, which are selectively couplable to each other so as to form/ delimit, in between themselves, the closed cavity 121.

In this case, in the passage from mould 110 to mould 120, thus, the second intermediate semi-finished product preferably remains attached to the punch 202.

In other words, the production of the lenticular body with a monolithic multilayer structure, or rather of the front half-shell 3, is suitable for being implemented in an injection-moulding press with a rotating table.

Finally, the production of the lenticular body with a monolithic multilayer structure, or rather of the front half-shell 3, preferably moreover provides for the step of mirror-metallizing the surface of the face of said third semi-finished product having said one or more blind recesses and/or engravings 8, i.e. the inner face 3b of the front half-shell 3, advantageously with the (sole) exception of some limited portions/areas of the bottom of some or all of said one or more blind recesses and/or engravings 8, which advantageously contribute to forming said buffer band 10.

More specifically, the mirror-metallization of the face of the third semi-finished product having said one or more blind recesses and/or engravings 8, i.e. of the inner face 3b of the front half-shell 3, comprises the step of applying an opaque reflective film 9 substantially over the whole surface of said face, advantageously by vacuum deposition; and preferably then the step of removing, advantageously by laser ablation, the opaque reflective film 9 from said one or more limited areas/portions of the bottom of some or all of said one or more blind recesses and/or engravings 8.

The advantages connected to the structure of the lighted badge 1 are remarkable.

The particular multilayer structure of the front half-shell 3 makes it possible to produce luminous identifying symbols, logos, acronyms, pictograms and/or brands that have a high contrast with respect to the background.

Furthermore, the particular multilayer structure of the front half-shell 3 has a high mechanical resistance to impacts and abrasions, combined with a high resistance to atmospheric agents and ultraviolet rays, with all the advantages that this entails.

The outer face 3a made of polymethylmethacrylate (PMMA), in fact, has a surface hardness and a resistance to atmospheric agents and ultraviolet rays that are significantly higher than those of the inner face 3b made of polycarbonate (PC).

Conversely, the inner face 3b made of polycarbonate (PC) is easily to be mirror-metallized at low cost.

In addition, the particular moulding sequence of the lens or front half-shell 3 solves the numerous critical issues inherent in a monolithic multilayer structure made of polymeric material, which comprises at least three superimposed layers that are made by overmoulding using at least two polymeric materials, which have different melting/softening temperatures.

Experimental tests, in fact, have shown that the overmoulding of the intermediate layer 6 made of polycarbonate (PC) onto the front layer 5 made of polymethylmethacrylate (PMMA) causes, in the transition zone between the two materials, optical defects and/or dimensional alterations, which instead do not occur when the front layer 5 made of polymethylmethacrylate (PMMA) is overmoulded onto the intermediate layer 6 made of polycarbonate (PC) .

Finally, it is clear that modifications and variations may be made to the lighted badge 1 and/or to the production method of the lens or front half-shell 3 without thereby departing from the scope of the present invention.

For example, the production of the lenticular body with a monolithic multilayer structure, or rather of the front half-shell 3, may provide for overmoulding first the inner layer 7 of the front half-shell 3 onto the intermediate layer 6, and then the outer layer 5 of the front half-shell 3 onto the intermediate layer 6, clearly on the opposite side with respect to the inner layer 7.

In addition, the front half-shell 3 may be used/incorporated in an automotive light or other type of lighting device for automotive use.

Finally, in a different embodiment of the front half-shell 3, or rather of the lenticular body with a monolithic multilayer structure, the rear layer 7 may be made of a (second) low-melting polymeric material which is still substantially opaque (to visible light) and advantageously also coloured.

## Claims

1. Production method of a lenticular body (3) for automotive use, which has a structure at least partially transparent to light, is provided with a first face (3a) and a second face (3b) opposite to each other, has one or more blind recesses and/or engravings (8) on said second face (3b), and has a monolithic multilayer structure comprising:
a substantially transparent, polymeric-material front layer (5), which forms said first face (3a); a substantially opaque, polymeric-material rear layer (7), which forms said second face (3b) and is crossed by said one or more blind recesses and/or engravings (8); and a substantially transparent, polymeric-material intermediate layer (6),
which is interposed between said front layer (5) and said rear layer (7);
said production method being **characterised in that** it comprises the step of making said intermediate layer (6) first and by injection moulding, in a substantially transparent, high-melting polymeric material; and afterward the step of overmoulding said front (5) and rear (7) layers of the lenticular body directly over said intermediate layer (6), on opposite sides thereof.

2. Production method of a lenticular body according to claim 1, wherein the step of overmoulding the front and rear layers provides for injection moulding said front layer (5) directly above said intermediate layer (6), in a substantially transparent low-melting polymeric material.

3. Production method of a lenticular body according to claim 1 or 2, wherein the step of overmoulding the front and rear layers provides for injection moulding said rear layer (7) directly above said intermediate layer (6), in a substantially opaque high-melting polymeric material.

4. Production method of a lenticular body according to any one of the preceding claims, wherein said front layer (5) is overmoulded onto said intermediate layer (6) prior to said rear layer (7).

5. Production method of a lenticular body according to any one of the preceding claims, wherein the polymeric material forming said intermediate layer (6) and the polymeric material forming said rear layer (7) have the same polymeric base.

6. Production method of a lenticular body according to any one of the preceding claims, wherein the polymeric material forming said intermediate layer (6) is a transparent polycarbonate.

7. Production method of a lenticular body according to any one of the preceding claims, wherein the polymeric material forming said rear layer (6) is an opaque polycarbonate.

8. Production method of a lenticular body according to any one of the preceding claims, wherein the polymeric material forming said front layer (5) is a transparent polymethylmethacrylate.

9. Production method of a lenticular body according to any one of the preceding claims, **characterised in that** it further comprises the step of mirror-metallizing the surface of the second face (3b) of said lenticular body.

10. Production method of a lenticular body according to claim 9, wherein one or more areas or limited portions (10) of the bottom of some or all of said one or more blind recesses and/or engravings (8) remain transparent.

11. Production method of a lenticular body according to claim 10, wherein said limited areas or portions (10) of the bottom of some or all of said one or more blind recesses and/or engravings (8) are located along the perimeter edge of the bottom of the same one or more blind recesses and/or engravings (8).

12. Lighted badge (1) for motor vehicles comprising: a rear body (2), which is concave in shape and is adapted to be fixed to the vehicle; an at least partially transparent, front half-shell (3) which is arranged to close the mouth of the rear body (2), so as to form, together with the rear body (2), a rigid and internally hollow casing; and an electrically-powered lighting assembly (4), which is at least partially housed within said rigid casing and is adapted to selectively back-light the front half-shell (3);
said lighted badge (1) being **characterised in that** the front half-shell (3) is a lenticular body with a polymeric-material, monolithic multilayer structure, which is made according to any one of Claims 1 to 11.

13. Lighted badge according to claim 12, wherein the front half-shell (3) has an outer face (3a) turned opposite to the rear body (2), and an inner face (3b) turned towards the rear body (2); the front layer (5) of said lenticular body contributes to forming the outer face (3a) of the front half-shell (3); the rear layer (7) of said lenticular body contributes to forming the inner face (3b) of the front half-shell (3).

14. Lighted badge according to claim 12 or 13, wherein the rear body (2) is shaped substantially in the form of a basin and/or the front half-shell (3) has a shape substantially complementary to the mouth of the rear body (2).

15. Lighted badge according to claim 12, 13 or 14, wherein the lighting assembly (4) is a LED light source substantially entirely accommodated within the rigid casing formed by the rear body (2) and the front half-shell (3).
